# EUROPÄISCHE PATENTSCHRIFT

(11) **EP 1 035 060 B1**
(45) Veröffentlichungstag und Bekanntmachung des Hinweises auf die Patenterteilung: **27.04.2005**
(21) Anmeldenummer: 00103030.3
(22) Anmeldetag: 15.02.2000
(51) Int. Cl.: B65H 67/08, B65H 67/06

(54) **Vorrichtung zum Beladen von Trägern mit Spinnspulen**
Device for loading carriers with bobbins
Dispositif pour charger des supports avec des bobbines

(30) Priorität: 05.03.1999 DE 19909701
(43) Veröffentlichungstag der Anmeldung: 13.09.2000
(73) Patentinhaber: Saurer GmbH & Co. KG, 41069 Mönchengladbach (DE)
(72) Erfinder: Kohlen, Helmut, 41812 Erkelenz (DE)

(56) Entgegenhaltungen:
- DE-A- 3 244 378
- DE-A- 3 604 372
- DE-A- 4 112 435
- US-A- 4 508 227
- US-A- 4 907 688

## Beschreibung

Die Erfindung betrifft eine Vorrichtung zum Beladen von Trägern mit Spinnspulen, mit einem vereinzelte Spinnspulen führenden Fallschacht, der über einem Transportmittel angeordnet ist, wobei die Träger mit einem Dorn versehen sind, auf welchen die jeweilige Spinnspule mit ihrer Hülse aufgesteckt wird.

Es ist zum Beispiel durch die DE 41 12 435 A1 bekannt, die Spinnspulen, insbesondere von Ringspinnmaschinen produzierte Kopse, als Schüttgut aus großen Behältern einem mehrstufigen Förderer zuzuführen, der die Spinnspulen dann vereinzelt und dann einzeln an einen Fallschacht abgibt. Die in richtiger Weise orientierten Spinnspulen fallen dann in Richtung zu einem Träger, der auf einem Transportmittel unterhalb des Fallschachtes positioniert wird. Dabei werden die Spinnspulen mit ihren Hülsen auf einen Dorn des Spulenträgers aufgesteckt. Mittels dieser Träger werden dann die Spinnspulen den Spulstellen eines Spulautomaten zugeführt, wobei sie zunächst eine Vorbereitungseinrichtung durchlaufen, die den Faden von dem Spulenmantel löst und an einer vorgegebenen Stelle bereitlegt, so daß der Faden dann leicht an einer Spulstelle gefunden und aufgenommen werden kann.

Bei Spinnspulen kommt es immer wieder vor, daß der Faden nicht sicher auf dem Spulenmantel fixiert ist. Es kommt dann bei dem Transport von dem Behälter zu dem Förderer und innerhalb des Förderers sowie auch innerhalb des Fallschachtes zu Fadenablösungen, die zu Störungen führen können. Diese Störungen können darin bestehen, daß die losen Fadenenden an irgendwelchen Stellen festgehalten werden, was dann zu weiteren Fadenabwicklungen und so genannten Schleppfäden führt. Besonders störend ist auch, daß die Gefahr besteht, daß bei dem Beladen der Träger die Fadenenden zwischen die Hülse der Spinnspule und den Träger gelangen und eingeklemmt werden können. Derartige Spinnspulen lassen sich dann in den automatischen Vorbereitungseinrichtungen kaum vorbereiten, da das Fadenende nicht gefunden und aufgenommen werden kann. Derartige Spinnspulen müssen dann ausgeschleust und manuell vorbereitet werden.

Die US-PS 4,508,227 beschreibt eine separate Kopsvorbereitungseinrichtung, die im Anschluß an eine Kopsvereinzelungseinrichtung angeordnet ist und automatisch ein mehrmaliges Vorbereiten bei ein- oder mehrmaligem Misserfolg ermöglicht. Zunächst werden die Kopse nach Verlassen eines Steigförderers durch einen Horizontalförderer entlang an Blaseinrichtungen für das Lockern des Fadenanfanges transportiert und anschließend einem Fallschacht zugeführt. Am oberen Ende dieses Fallschachtes ist eine Ringdüse angeordnet, die das durch die Blaseinrichtungen gelockerte Fadenende aufnimmt, während der Kops mit seinem Fuß von einem Saugtrichter aufgenommen wird. Dieser Saugtrichter ist von der Ringdüse so weit beabstandet, daß sich von der Kopsspitze bis zu einer Trenneinrichtung unterhalb der Ringdüse eine Fadenstrecke ergibt, die ausreicht, um über den Saugtrichter eine Fadenlänge in die Kopshülse einsaugen zu können, die in der Spulstelle eine Zuführung des Fadenanfanges zu einem Greiforgan ermöglicht. Die entsprechend vorbereiteten Kopse werden über ein Taschenband Behältern zugeführt, in denen sie für den späteren Transport zu einer Spulmaschine gesammelt werden.

Durch die DE 36 04 372 A1 ist eine Kopsvorbereitungseinrichtung bekannt, bei der die Kopse über einen Trichter einem Getriebe zugeführt werden, auf dem der Kops in horizontaler Lage um seine Achse rotiert wird, wobei über einen längs des Kopses angeordneten Saugschlitz das Fadenende von dem rotierenden Kops aufgenommen wird. Anschließend wird der Kops über eine Rutsche und einem Kippvorgang einem Führungszylinder in vertikaler Ausrichtung zugeführt, wo der Kops auf einer schwenkbaren Platte abgesetzt wird. Dabei wird das eingangs erfasste Fadenende nicht freigegeben und bleibt in gespanntem Zustand. Durch ein in einem bestimmten Abstand zum Führungszylinder angeordnetes Trennwerkzeug wird der faden geschnitten und über eine unterhalb der Platte auf eine Öffnung in der Platte ausgerichtete Saugdüse durch die Kopshülse angesaugt. Dadurch wird das Fadenende in der Hülse abgelegt und kann in der Spulstelle durch die Hülse wieder ausgeblasen werden. Die Anordnung der Vorbereitungseinrichtung im Zuführweg der Kopse zum Träger bindet die Taktleistung der Kopszufuhr an die Dauer der Kopsvorbereitung.

Der Erfindung liegt die Aufgabe zugrunde, eine Vorrichtung zum Beladen von Trägern mit Spinnspulen so auszubilden, daß die Gefahr weitgehend ausgeschlossen wird, daß ein Faden zwischen dem Träger und der Spinnspule eingeklemmt wird.

Diese Aufgabe wird dadurch gelöst, daß der Fallschacht eine mit einer Unterdruckquelle verbundene Ringdüse zum Besaugen des Umfangs einer durch ihn hindurch geschickten Spinnspule und nachgeordnete Mittel zum Durchführen eines quer zur Längsrichtung des Fallschachtes gerichteten Schneidevorgangs enthält. Um sicherzustellen, daß die Ringdüse relativ nahe dem Umfang der Spinnspule zugeordnet ist, ist die Ringdüse am unteren Ende des Falltrichters des Fallschachtes angeordnet.

Ein unterhalb der Ringdüse angeordneter Sensor bildet ein Betätigungssignal für die Mittel zum Schneiden. Dadurch läßt sich erreichen, daß jedesmal dann ein Schneidvorgang ausgeführt wird, wenn eine Spinnspule den Sensor passiert hat. Dabei kommt es nicht darauf an, ob ein Fadenende angesaugt wurde oder nicht. Wenn kein Fadenende angesaugt wurde, beispielsweise weil der Faden fest genug mit dem Spulenmantel verbunden ist, so wird eine leere Schneidebewegung durchgeführt.

Die Ringdüse saugt lose Fäden, Fadenenden und Staubbatzen während der Fallbewegung der Spinnspule an und führt damit zu einer Reinigung der Spinnspule. Wenn ein loses Fadenende angesaugt worden ist, so wird dies von der Spinnspule getrennt, nachdem die Spinnspule die Ringdüse passiert hat. Dadurch wird ein relativ kurzes, geschnittenes Fadenende geschaffen, das kaum noch zu Störungen im Materialfluß Anlaß sein wird. Vor allem wird auch mit Sicherheit verhindert, daß das Fadenende zwischen der Hülse der Spinnspule und dem Träger eingeklemmt wird. Die Gefahr von auftretenden Schleppfäden wird somit bereits an der Vorrichtung zum Beladen weitestgehend beseitigt, bevor die Spinnspulen sich auf dem Weg zu dem Spulautomaten befinden.

Um einen Schneidvorgang durchzuführen, ist in zweckmäßiger Ausgestaltung der Erfindung eine Schere vorgesehen, von welcher wenigstens eine Klinge um eine zur Längsrichtung des Fallschachtes parallele Achse verschwenkbar ist. Diese Schere kann ohne weiteres den gesamten Querschnitt des Fallschachtes bestreichen, so daß es nicht darauf ankommt, an welcher Stelle sich zufällig ein angesaugter Faden befindet.

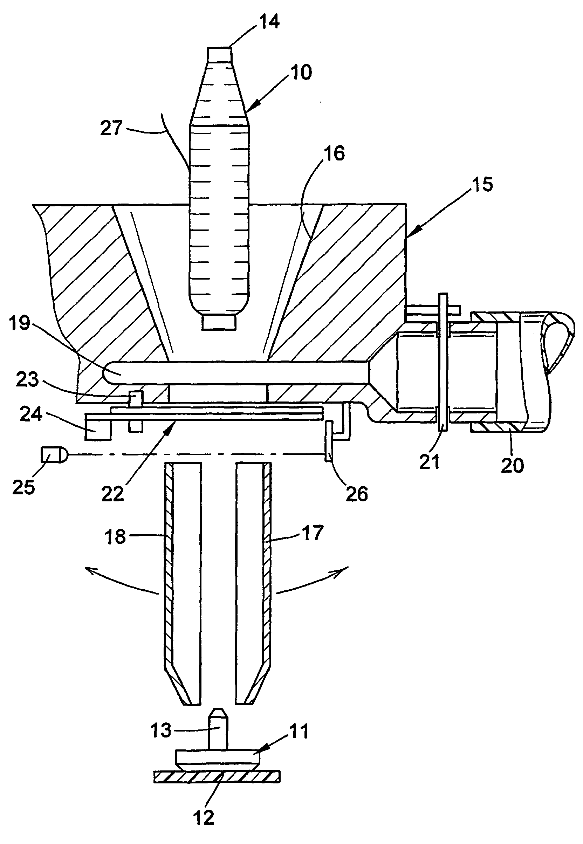

Weitere Merkmale und Vorteile der Erfindung ergeben sich aus der nachfolgenden Beschreibung einer in der Zeichnung dargestellten Ausführungsform.

Die Zeichnung zeigt einen Axialschnitt durch eine Vorrichtung zum Beladen von Trägern mit Spinnspulen. Mittels der Vorrichtung wird jeweils eine Spinnspule 10, insbesondere ein an einer Ringspinnmaschine hergestellter Kops, auf einen Spulenträger 11 aufgesetzt, der mittels eines Transportbandes 12 zugeführt und nach dem Beladen abtransportiert wird. Der Träger 11 ist mit einem Dorn 13 versehen, auf welchen eine Spinnspule 10 mit ihrer Hülse 14 aufgesteckt wird.

Die Vorrichtung enthält eine nicht näher dargestellte mehrstufige Fördereinrichtung, insbesondere einen Flach-Rund-Förderer. Diesem wird eine Vielzahl von Spinnspulen 10 als Schüttgut zugeführt, der die Spinnspulen weitertransportiert, vereinzelt und auf ein entsprechendes Anforderungssignal hin durch einen Fallschacht 15 hindurch nach unten zu dem Träger 11 fallen läßt. Zwischen der Fördereinrichtung und dem Fallschacht befindet sich eine Vorrichtung zum Ausrichten der Spinnspule, so daß diese jeweils mit korrekter Orientierung in den Fallschacht gelangt und nach unten fällt. Der Fallschacht 15 besitzt einen Falltrichter 16, an den zwei Ladeschachtklappen 17, 18 anschließen, die die Spinnspule 10 zu dem Dorn 13 des Trägers 11 hin zentrieren. Die Ladeschachtklappen 17, 18 werden in nicht näher dargestellter Weise in Pfeilrichtung aufgeschwenkt, um den beladenen Träger 11 abtransportieren zu können.

Am unteren Ende des Falltrichters 16 ist eine Ringdüse 19 vorgesehen, die auf eine vorbeifallende Spinnspule 10 eine im wesentlichen allseitige, radiale Saugströmung ausübt. Die Ringdüse 19 ist über eine Leitung 20 an eine nicht dargestellte Unterdruckquelle angeschlossen. Zwischen der Unterdruckquelle und der Ringdüse 19 ist eine verschwenkbare Blende 21 als Absperrorgan vorgesehen.

Unterhalb der Ringdüse 19 ist als Schneideinrichtung eine Schere 22 angeordnet, deren Klingen um eine zur Achse des Fallschachtes parallele Achse 23 verschwenkbar sind. Die Klingen der Schere 22 überstreichen den gesamten Querschnitt des Fallschachtes nach der Ringdüse 19. Die Schere 22 ist mittels eines nur angedeuteten Antriebes 24 betätigbar. Der Antrieb 24 wird mittels einer Lichtschranke 25, 26 ausgelöst, die der Schere 22 nachgeordnet ist. Die Ringdüse 19, die Schere 22 und die Lichtschranke 25, 26 sind in ausreichendem Abstand oberhalb des Transportbandes 12 angeordnet, so daß die Spinnspule, wenn sie auf den Träger 11 aufgesteckt ist, mit ihrem oberen Ende den Bereich der Lichtschranke 25, 26 verlassen hat.

Wenn ein Ladevorgang durchgeführt wird, d.h. eine Spinnspule 10 abgeworfen wird, so wird die Blende 21 geöffnet, so daß die Ringdüse 19 mit Unterdruck beaufschlagt ist und den Umfang einer vorbeifallenden Spinnspule 10 besaugt. Sie löst dabei Fadenreste, Staubbatzen o.dgl. sowie auch ein loses Fadenende von dem Umfang der Spinnspule 10 ab, beispielsweise ein in der Zeichnung dargestelltes Fadenende 27. Dieses Fadenende wird in der Ringdüse aufgefangen und festgehalten. Nachdem die Spinnspule 10 die Lichtschranke 25, 26 passiert hat, wird ein Schneidvorgang der Schere 22 ausgelöst. Das Fadenende wird abgeschnitten und abgesaugt. Das in Verbindung mit der Spinnspule verbliebene Fadenstück ist so kurz, daß die Gefahr wesentlich reduziert ist, daß es während des Weitertransportes an irgendeinem Hindernis festgehalten wird und einen Schleppfaden bildet. Außerdem ist mit hoher Sicherheit ausgeschlossen, daß ein loses Fadenende zwischen der Spulenhülse 14 und dem Dorn 13 oder sonst dem Träger 11 festgeklemmt wird.

Wenn die den Fallschacht 15 passierende Spinnspule 10 kein loses Fadenende aufweist, so passiert im Grunde genommen nichts. Es wird lediglich nach dem Aufstecken der Spinnspule 10 auf den zugehörigen Träger 11 ein Schneidvorgang ausgelöst, der allerdings nichts schneidet.

## Patentansprüche

1. Vorrichtung zum Beladen von Trägern (11) mit Spinnspulen (10), mit einem vereinzelte Spinnspulen führenden Fallschacht (15); der über einem Transportmittel (12) angeordnet ist, wobei die Träger (11) mit einem Dorn (18) versehen sind, auf welchen die jeweilige Spinnspule (10) mit ihrer Hülse (14) aufgesteckt wird,
**dadurch gekennzeichnet,**
**daß** der Fallschacht (15) eine mit einer Unterdruckquelle verbundene Ringdüse (19) zum Besaugen des Umfangs einer durch ihn hindurch geschickten Spinnspule (10) und nachgeordnete Mittel (22) zum Durchführen eines quer zur Längsrichtung des Fallschachtes gerichteten Schneidvorgangs enthält, daß die Ringdüse (19) am unteren Ende des Falltrichters (16) des Fallschachtes (15) angeordnet ist und daß unterhalb der Ringdüse (19) ein auf das Vorbeibewegen der Spinnspule ansprechender Sensor (25, 26) angeordnet ist, der ein Betätigungssignal für die Mittel (22) zum Schneiden bildet.

2. Vorrichtung nach Anspruch 1, **dadurch gekennzeichnet, daß** in einer Verbindung zwischen der Ringdüse (19) und der Unterdruckquelle ein Absperrelement (21) angeordnet ist.

3. Vorrichtung nach Anspruch 1, **dadurch gekennzeichnet, daß** die Mittel zum Durchführen des Schneidvorganges durch eine Schere (22) gebildet sind, von welcher wenigstens eine Klinge um eine zur Längsrichtung des Fallschachtes (15) parallele Achse (23) verschwenkbar ist.

## Claims

1. Device for loading carriers (11) with bobbins (10), comprising a drop shaft (15) which guides separate bobbins and is arranged above a conveying means (12), the carriers (11) being provided with a mandrel (13) onto which the respective bobbin (20) with its tube (14) is mounted, **characterised in that** the drop shaft (15) contains an annular nozzle (19) connected to a vacuum source to apply suction to the periphery of a bobbin (10) sent through the drop shaft (15) and downstream means (22) for carrying out a cutting process directed transverse to the longitudinal direction of the drop shaft, **in that** the annular nozzle (19) is arranged at the lower end of the drop funnel (16) of the drop shaft (15) and **in that** arranged below the annular nozzle (19) is a sensor (25, 26) which responds to the passing movement of the bobbin and forms an actuating signal for the means (22) for cutting.

2. Device according to claim 1, **characterised in that** a blocking element (21) is arranged in a connection between the annular nozzle (19) and the vacuum source.

3. Device according to claim 1, **characterised in that** the means for carrying out the cutting process are formed by a cutter (22), of which at least one blade can be pivoted about an axis (23) which is parallel to the longitudinal direction of the drop shaft (15).

## Revendications

1. Dispositif pour charger des supports (11) avec des bobines (10), comprenant un conduit de descente (15) guidant les bobines une par une, qui est disposé au-dessus d'un moyen de transport (12), les supports (11) étant munis d'une broche (13) sur laquelle on enfonce chaque bobine (10) avec sa douille (14), **caractérisé en ce que** le conduit de descente (15) renferme une buse annulaire (19) reliée à une source de vide pour aspirer le pourtour d'une bobine (10) envoyée à travers lui, et des moyens (22) en aval pour effectuer une coupe orientée transversalement à la direction longitudinale du conduit de descente, **en ce que** la buse annulaire (19) est disposée à l'extrémité inférieure de l'entonnoir de descente (16) du conduit de descente (15), et **en ce que** sous la buse annulaire (19) est disposé un capteur (25, 26) réagissant au passage de la bobine, qui délivre un signal d'actionnement pour les moyens de coupe (22).

2. Dispositif selon la revendication 1, **caractérisé en ce qu'**un élément d'arrêt (21) est disposé dans une jonction entre la buse annulaire (19) et la source de vide.

3. Dispositif selon la revendication 1, **caractérisé en ce que** les moyens pour effectuer la coupe sont constitués par des ciseaux (22) dont au moins une des lames peut pivoter autour d'un axe (23) parallèle à la direction longitudinale du conduit de descente (15).
